# EUROPÄISCHE PATENTSCHRIFT

(11) **EP 1 047 286 B1**
(45) Veröffentlichungstag und Bekanntmachung des Hinweises auf die Patenterteilung: **05.11.2003**
(21) Anmeldenummer: 00107458.2
(22) Anmeldetag: 06.04.2000
(51) Int. Cl.: H05B 41/38, H05B 41/36, H05B 37/02

(54) **Vorschaltgerät für eine Hochdruckgasentladungslampe in einem Kraftfahrzeug**
Ballast for discharge lamp in automobile
Starter pour lampe à décharge dans un véhicule

(30) Priorität: 22.04.1999 DE 19918261
(43) Veröffentlichungstag der Anmeldung: 25.10.2000
(73) Patentinhaber: Hella KG Hueck & Co., 59552 Lippstadt (DE)
(72) Erfinder: Radtke, Volker, 33330 Gütersloh (DE)

(56) Entgegenhaltungen:
- EP-A- 0 644 709
- DE-A- 4 331 952
- US-A- 4 240 009

## Beschreibung

Die Erfindung betrifft ein Vorschaltgerät für eine Hochdruckgasentladungslampe in einem Kraftfahrzeug, mit einem Gleichspannungswandler, einer dem Gleichspannungswandler nachgeschalteten H-Brückenschaitung und einer Zündschaltung, und einem Regler, dessen Ausgangsgröße den Gleichspannungswandler steuert, einer Einrichtung zur Leistungserfassung, welche dem Regler einen Istwert für die Lampenleistung zuführt, und einer Einrichtung zur Referenzspannungserzeugung, welche dem Regler einen Sollwert für die Lampenleistung zuführt.

Ein solches Vorschaltgerät ist aus der DE 43 31 952 A1 bekannt. Das bekannte Vorschaltgerät weist eine Steuereinrichtung auf, die insbesondere während der Startphase der Hochdruckgasentladungslampe eine erhöhte Ausgangsleistung des Gleichspannungswandlers zuläßt, und die Lampenleistung während der stationären Brennphase der Hochdruckgasentladungslampe auf einen niedrigeren Wert begrenzt.

Das der Erfindung zugrundeliegende Problem betrifft die Verhinderung einer thermischen Überlastung des Vorschaltgerätes bedingt durch äußere Erwärmung und Eigenerwärmung im Betrieb. Die maximal zulässige Betriebstemperatur eines Vorschaltgerätes für eine Hochdruckgasentladungslampe wird bestimmt durch die maximale Temperaturfestigkeit seiner Einzelkomponenten (z.B. für passive Bauelemente typisch: Tmax = 125°C). Die kritische Temperatur ergibt sich im wesentlichen aus der Umgebungstemperatur und der Eigenerwärmung des Vorschaltgerätes. Die Eigenerwärmung wiederum wird wesentlich durch die im Vorschaltgerät erzeugte Verlustleistung bestimmt. Um den kurzzeitigen Betrieb ohne Überlastung der Komponenten auch unter extremen Umgebungstemperaturen von über 100 °C zu ermöglichen, ist es bei hohen Temperaturen vorteilhaft die Lampenleistung auf geringere Leistungswerte zu reduzieren, da hiermit die Verlustleistung und somit die Eigenerwärmung verringert werden. Die Leistungsreduzierung soll dabei erst ab einer vorgebbaren Temperaturschwelle (Einsatztemperaturwert) ausgeführt werden.

Der Erfindung liegt also die Aufgabe zugrunde, ein möglichst einfaches und kostengünstiges Vorschaltgerät für eine Hochdruckgasentladungslampe in einem Kraftfahrzeug zu schaffen, welches die Lampenleistung ab einem vorgebbaren Einsatztemperaturwert von der Nennleistung kontinuierlich auf eine geringere Leistung bei einer höheren Temperatur zu reduzieren.

Diese Aufgabe wird erfindungsgemäß dadurch gelöst, daß eine Schaltungsanordnung den die Lampenleistung bestimmende Sollwert oberhalb eines vorgebbaren Einsatztemperaturwertes temperaturabhängig reduziert.

Hierbei ist besonders vorteilhaft, daß eine Schaltungsanordnung, die eine temperaturabhängige Leistungsreduzierung durchführt einen sehr einfachen und kostengünstigen Aufbau aufweist. Ebenfalls vorteilhaft ist, daß die Schaltungsanordnung mit nur geringem Aufwand in (z.B. aus der DE 43 31 952 A1) bekannte Vorschaltgeräte implementiert werden kann.

Eine besonders vorteilhafte Ausführungsform des erfindungsgemäßen Vorschaltgerätes ergibt sich aus den Merkmalen der Unteransprüche.

Vorgeschlagen wird zur Leistungsreduzierung eine Schaltungsanordnung, die aus zwei Spannungsteilern besteht, welche mit einer Doppeldiode verkoppelt sind, wobei einer der Spannungsteiler einen temperaturabhängigen Widerstand enthält.

Bei einem Vorschaltgerät mit derart ausgeführter Schaltungsanordnung kann durch die Dimensionierung der Spannungsteileranordnung sowohl der Einsatztemperaturwert, als auch die Größe der temperaturabhängigen Leistungsreduzierung (Derating dP/dT) auf einfache Weise festgelegt werden. Die Schaltungsanordnung zeichnet sich zudem dadurch aus, daß unterhalb des Einsatztemperaturwertes die Lampenleistung temperaturunabhängig ist und die Schaltungsanordnung die Einsatztemperatur und das Derating mit hoher Genauigkeit einhält.

Im folgenden wird ein Ausführungsbeispiel des erfindungsgemäßen Vorschaltgerätes anhand der Zeichnung dargestellt und näher erläutert.

Es zeigen
- Figur 1: eine Spannungsteilerschaltung,
- Figur 2: zwei Diagramme: dargestellt sind der Sollspannungswert und die Lampenleistung in Abhängigkeit von der Temperatur,
- Figur 3: ein Blockschaltbild des Vorschaltgerätes.

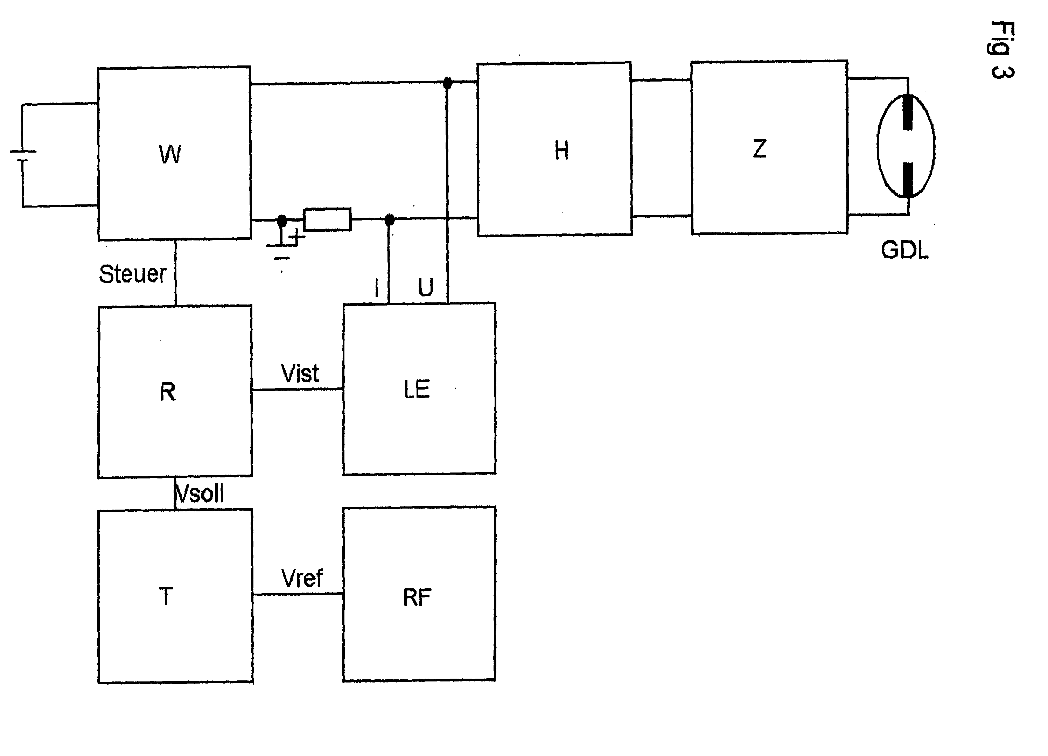

Das allgemeine Funktionsprinzip des Vorschaltgerätes wird anhand der Figur 3 beschrieben.

Die Schaltung weist einen Gleichspannungswandler (W) auf dessen Ausgangsspannung über eine H-Brückenschaltung (H) wechselgerichtet einer Hochdruckgasentladungslampe (GDL) zugeführt wird. Die zum Zünden erforderliche Hochspannung erzeugt eine zwischen H-Brückenschaltung (H) und Hochdruckgasentladungslampe (GDL) geschaltete Überlagerungszündschaltung (Z).

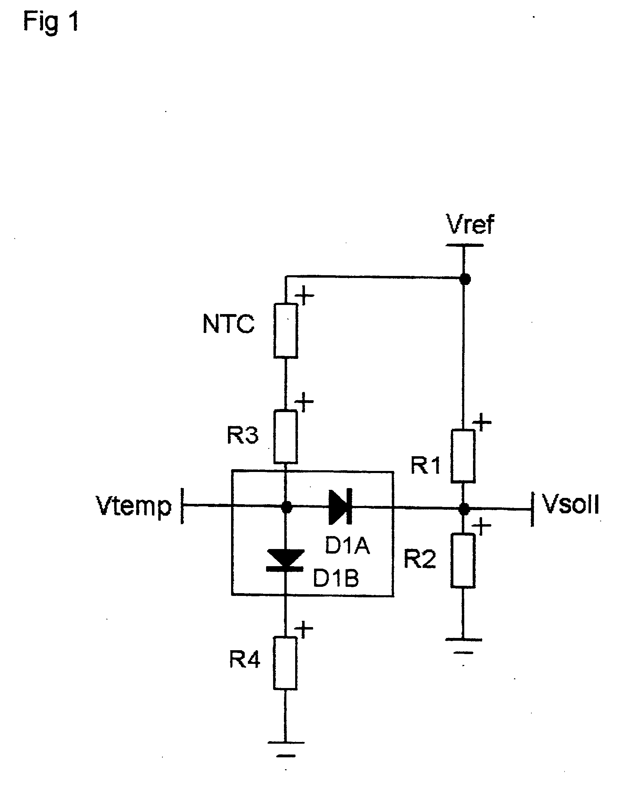

Die Ausgangsleistung des Gleichspannungswandlers (W) wird durch die Ausgangsgröße (Steuer) eines Reglers (R) gesteuert. Eine Leistungserfassungseinrichtung (LE) erfaßt Lampenstrom (I) und Lampenspannung (U) und gibt einen der Lampenleistung entsprechenden Istspannungswert (Vist) an den Regler (R). Die entsprechende Sollwertvorgabe stammt von einer Einrichtung zur Referenzspannungserzeugung (RF), welche einen Referenzspannungswert (Vref) erzeugt. Dieser Referenzspannungswert (Vref) wird von der Schaltungsanordnung zur temperaturabhängigen Leistungsreduzierung (T) temperaturabhängig modifiziert. Die Funktionsweise dieser Schaltungsanordnung (T) wird anhand der Figur 1 näher erläutert.

Die in der Figur 1 dargestellte Schaltungsanordnung besteht aus zwei, mittels einer ersten Diode (D1A) verkoppelten Spannungsteilern. Der erste Spannungsteiler, bestehend aus den Widerständen R1 und R2, ist der standardmäßig vorhandene Sollspannungsteiler. Dieser erzeugt aus einer Referenzspannung (Vref) den Sollspannungswert (Vsoll), welcher den Sollwert für die Leistungsregelung darstellt, wobei Spannung und abgegebene Leistung umgekehrt proportional zueinander sind. Der zweite Spannungsteiler, der einen temperaturabhängigen Spannungswert (Vtemp) erzeugt, wird gebildet durch einen temperaturabhängigen Widerstand (NTC), hier ausgebildet als Heißleiter, den Widerständen R3 und R4, sowie einer zweiten Diode (D1B). Mit steigender Temperatur wird die Reihenschaltung aus dem Widerstand R3 und dem Heißleiter (NTC) immer niederohmiger, so daß der temperaturabhängige Spannungswert (Vtemp) ansteigt. Wenn der temperaturabhängige Spannungswert (Vtemp) größer wird als die Summe aus dem Sollspannungswert (Vsoll) und der Flußspannung der ersten Diode (D1A), wird der vorher konstante Sollspannungswert (Vsoll) angehoben.

Mit wachsender Temperatur steigt also der Sollspannungswert (Vsoll) und damit fällt die abgegebene Leistung. Der Fehler durch die Flußspannungen der Dioden (D1A, D1B) ist sehr gering, da diese nur bei sehr hohen Temperaturen Einfluß haben (hohe Temperatur ⇔ niedrige Flußspannung) und zusätzlich durch den Einsatz von zwei thermisch miteinander verbundenen Dioden (D1A, D1B) größtenteils kompensiert wird. Dies ist der Fall, wenn die durch beide Dioden (D1A, D1B) fließenden Ströme von gleicher Größenordnung sind.

Vorteilhafterweise können beide Dioden durch eine handelsübliche Doppeldiode ausgeführt werden, da hierdurch erstens beide Dioden (D1A, D1B) eine besonders gute thermische Kopplung und zweitens besonders gut übereinstimmende Kennlinien aufweisen. Wenn die Widerstandsteiler sehr hochohmig ausgelegt werden, verhindert der Einsatz einer low leakage Diode sicher, daß unterhalb der Einsatztemperatur eine ungewollte Beeinflußung des Sollspannungswertes (Vsoll) durch einen Leckstrom erfolgt.

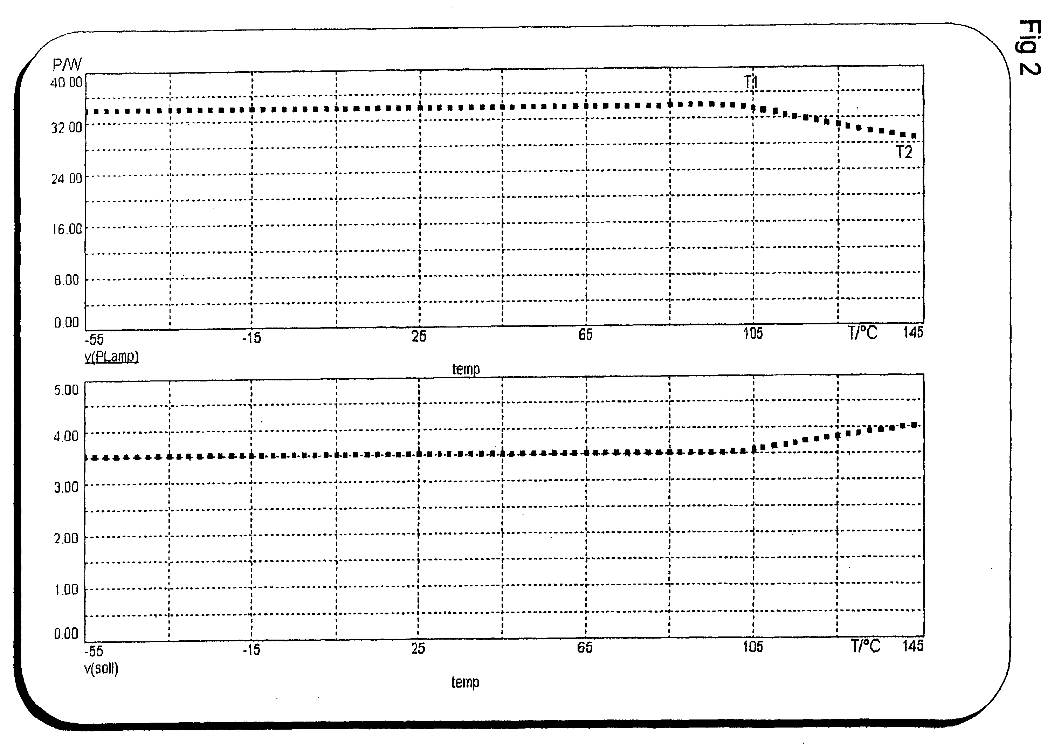

Die Figur 2 zeigt den typischen Verlauf der Sollspannung (unteres Diagramm) und die daraus resultierende Lampenleistung (oberes Diagramm) in Abhängigkeit von der Temperatur.

Wie die Diagramme zeigen, ist sowohl der Sollspannungswert als auch der Lampenleistungswert über weite Temperaturbereiche konstant (ca. 3,5 V bzw. 34 W). Erst ab dem Einsatztemperaturwert (T1), der hier ca. 105 °C beträgt, steigt der Sollspannungswert etwa linear, wodurch die Lampenleistung umgekehrt linear abfällt. Bei einer Temperatur von etwa 145 °C ist die Lampenleistung auf 28 W abgesunken. Hierdurch wird eine thermische Überlastung und Zerstörung des Vorschaltgerätes auch bei sehr hohen Temperaturen wirkungsvoll verhindert.

### Bezugszeichen

- D1A: erste Diode
- D1B: zweite Diode
- H: H-Brückenschaltung
- LE: Leistungserfassungseinrichtung
- NTC: temperaturabhängiger Widerstand (Heißleiter)
- R: Regler
- R1, R2, R3, R4: Widerstände
- RF: Referenzspannungserzeugungseinrichtung
- T: Schaltungsanordnung zur temperaturabhängigen Leistungsreduzierung
- W: Gleichspannungswandler
- Z: (Überlagerungs-) Zündschaltung

- (R1, R2): erster Spannungsteiler
- (NTC, R3, D1B, R4): zweiter Spannungsteiler

- Steuer: Ausgangsgröße (des Reglers)
- T1: Einsatztemperaturwert
- I: Lampenstrom
- U: Lampenspannung
- Vist: Ist(spannungs)wert
- Vref: Referenzspannungswert
- Vsoll: Soll(spannungs)wert
- Vtemp: temperaturabhängiger Spannungswert

## Patentansprüche

1. Vorschaltgerät für eine Hochdruckgasentladungslampe in einem Kraftfahrzeug
- mit einem Gleichspannungswandler (W),
- einer dem Gleichspannungswandler (W) nachgeschalteten H-Brückenschaltung (H) und einer Zündschaltung (Z),
- und einem Regler (R), dessen Ausgangsgröße (Steuer) den Gleichspannungswandler steuert,
- einer Einrichtung zur Leistungserfassung (LE), welche dem Regler (R) einen Istwert (Vist) für die Lampenleistung zuführt,
- und einer Einrichtung zur Referenzspannungserzeugung (RF), welche dem Regler (R) einen Sollwert (Vsoll) für die Lampenleistung zuführt,
**dadurch gekennzeichnet, daß**
eine Schaltungsanordnung den die Lampenleistung bestimmende Sollwert (Vsoll) oberhalb eines vorgebbaren Einsatztemperaturwertes (T1) temperaturabhängig reduziert.

2. Vorschaltgerät nach Anspruch 1, **dadurch gekennzeichnet, daß** die Schaltungsanordnung aus zwei gekoppelten Spannungsteilem (R1, R2 und NTC, R3, D1B, R4) besteht, wobei der erste Spannungsteiler (R1, R2) einen konstanten Sollspannungswert (Vsoll) vorgibt, und der zweite Spannungsteiler (NTC, R3, D1B, R4) einen temperaturabhängigen Spannungswert (Vtemp) vorgibt und daß die beiden Spannungsteiler (R1, R2 und NTC, R3, D1B, R4) mittels einer ersten Diode (D1A) gekoppelt sind.

3. Vorschaltgerät nach Anspruch 2, **dadurch gekennzeichnet, daß** der zweite Spannungsteiler einen temperaturabhängigen Widerstand (NTC) aufweist.

4. Vorschaltgerät nach Anspruch 2, **dadurch gekennzeichnet, daß** der zweite Spannungsteiler eine zweite Diode (D1B) aufweist und daß die erste Diode (D1A) und die zweite Diode (D1B) thermisch miteinander verbunden sind.

5. Vorschaltgerät nach Anspruch 4, **dadurch gekennzeichnet, daß** die erste Diode (D1A) und die zweite Diode (D1B) als Doppeldiode ausgebildet sind.

## Claims

1. Power supply device for a high-pressure luminous discharge light in a vehicle
- with a D.C. transformer (DCT)
- an H-bridge circuit connection to the outlet side of the D.C. transformer (DCT) and an ignition circuit (IG)
- and a regulator (R) the magnitude of output (control) of which controls the D.C. transformer,
- a device, for determining power (DP), that supplies the regulator with an actual value (V_{actual}) for the light power,
- and a device (RF), for producing the reference voltage, that supplies the regulator (R) with a required value (V_{required}) for the light power,
**characterized in that**
a circuit arrangement reduces, on the basis of temperature, the required value (V_{required}), which determines the light power, above a value of temperature of use (T1) that can be passed forward.

2. Power supply device in accordance with claim 1, **characterized in that** the circuit arrangement comprises two connected voltage dividers (R1, R2 and NTC, R3, D1B, R4), whereby the first voltage divider (R1, R2) passes a constant required voltage (V_{required}) forward, and the second voltage divider (NTC, R3, D1B, R4) passes a temperature-responsive voltage (Vₜₑₘₚ) forward and that the two voltage dividers (R1, R2 and NTC, R3, D1B, R4) are connected by means of a first diode (D1A).

3. Power supply device in accordance with claim 2, **characterized in that** the second voltage divider has a temperature-responsive resistance (NTC).

4. Power supply device in accordance with claim 2, **characterized in that** the second voltage divider has a second diode (D1B) and **in that** the first diode (D1A) and the second diode (D1B) are connected to each other thermally.

5. Power supply device in accordance with claim 4, **characterized in that** the first diode (D1A) and the second diode (D1B) are developed as a double diode.

## Revendications

1. Ballast pour lampe à décharge de gaz dans un véhicule automobile, comportant
- un convertisseur continu-continu (W),
- un circuit en pont H (H) monté en aval du convertisseur continu-continu (W) et un circuit d'allumage (Z),
- et un régulateur (R) dont la grandeur de sortie (commande) commande le convertisseur continu-continu (W),
un dispositif de détection de puissance (LE) qui amène au régulateur (R) une valeur réelle (Vréel) pour la puissance de la lampe,
et un dispositif de génération d'une tension de référence (RF) qui amène au régulateur (R) une valeur de consigne (Vconsigne) pour la puissance de lampe,
**caractérisé en ce qu'**un circuit réduit, en fonction de la température, la valeur déterminant la puissance de lampe (Vconsigne) au-dessus d'une valeur de température de mise en oeuvre (T1) qui peut être prédéterminée.

2. Ballast selon la revendication 1, **caractérisé en ce que** le circuit est constitué par deux diviseurs de tension couplés (R1, R2 et NTC, R3, D1B, R4), le premier diviseur de tension donnant une valeur de tension de consigne constante (Vconsigne), et le deuxième diviseur de tension (NTC, R3, D1B, R4) donnant une valeur de tension dépendant de la température (Vtemp), et **en ce que** les deux diviseurs de tension (R1, R2 et NTC, R3, D1B, R4) sont couplés au moyen d'une première diode (D1A).

3. Ballast selon la revendication 2, **caractérisé en ce que** le deuxième diviseur de tension présente une résistance (NTC) dépendant de la température

4. Ballast selon la revendication 2, **caractérisé en ce que** le deuxième diviseur de tension présente une deuxième diode (D1B) et **en ce que** la première diode (D1A) et la deuxième diode (D1B) sont reliées thermiquement l'une à l'autre.

5. Ballast selon la revendication 4, **caractérisé en ce que** la première diode (D1A) et la deuxième diode (D1B) sont réalisées sous forme de diode double.
